# FASCICULE DE BREVET EUROPEEN

(11) **EP 0 956 150 B1**
(45) Date de publication et mention de la délivrance du brevet: **10.12.2003**
(21) Numéro de dépôt: 97911286.9
(22) Date de dépôt: 17.10.1997
(51) Int. Cl.: B01D 71/02, C04B 38/00, C04B 41/50, B01D 69/10

(54) **MEMBRANE INORGANIQUE DE NANOFILTRATION ET SON APPLICATION DANS L'INDUSTRIE SUCRIERE**
ANORGANISCHE NANOFILTRATIONSMEMBRAN UND IHRE VERWENDUNG IN DER ZUCKERINDUSTRIE
INORGANIC NANOFILTRATION MEMBRANE AND ITS APPLICATION IN THE SUGAR INDUSTRY

(30) Priorité: 21.10.1996 FR 9612734
(43) Date de publication de la demande: 17.11.1999
(73) Titulaire: Orelis, 92408 Courbevoie Cedex (FR)
(72) Inventeur: THORAVAL, Valérie, F-69480 Morance (FR)
(74) Mandataire: Delenne, Marc
(86) Numéro de dépôt international: FR9701861
(87) Numéro de publication internationale: WO98017378

(56) Documents cités:
- EP-A- 0 263 468
- EP-A- 0 426 546
- EP-A- 0 585 152
- PATENT ABSTRACTS OF JAPAN vol. 15, no. 325 (M-1148), 19 août 1991 & JP 03 124435 A (NIPPON CEMENT CO LTD), 28 mai 1991,
- PATENT ABSTRACTS OF JAPAN vol. 16, no. 76 (C-0914), 25 février 1992 & JP 03 267129 A (NGK INSULATORS LTD), 28 novembre 1991,
- A.JULBE ET AL: "the sol-gel approach to prepare candidate microporous inorganic membranes for membrane reactors" JOUNAL OF MEMBRANE SCIENCE, vol. 77, no. 2/3, 4 mars 1993, AMSTERDAM,NL, page 137-153 XP000387932
- PATENT ABSTRACTS OF JAPAN vol. 16, no. 289 (C-0956), 26 juin 1992 & JP 04 077303 A (TOSHIBA CERAMICS CO LTD), 11 mars 1992,

## Description

La présente invention concerne une membrane inorganique de nanofiltration utilisable notamment dans l'industrie sucrière, en particulier dans le raffinage du sucre de canne.

Les membranes sont connues depuis de nombreuses années pour leurs propriétés de séparation et se développent rapidement par rapport aux techniques séparatives classiques dans beaucoup de secteurs d'activité, notamment l'agroalimentaire, la biotechnologie, l'industrie chimique, pharmaceutique et nucléaire, l'environnement, en particulier le traitement des eaux potables et des effluents industriels.

Ce transfert technologique vers les techniques séparatives à membrane est apparu de façon assez marquée dans les domaines de la microfiltration tangentielle (diamètre moyen des pores de la membrane compris entre 0,1 et 5 µm) et de l'ultrafiltration tangentielle (diamètre moyen des pores de la membrane compris entre 2 et 150 nm).

Dans les techniques de filtration tangentielle, le fluide à traiter circule parallèlement à la membrane.

Les premières membranes utilisées ont été des membranes organiques qui, dans les domaines de la microfiltration et de l'ultrafiltration, sont remplacées de plus en plus par des membranes inorganiques ; celles-ci présentent en général une meilleure résistance mécanique et une meilleure stabilité chimique, biologique et thermique.

Il a été développé récemment des membranes de nanofiltration fonctionnant le plus souvent sous flux tangentiel (diamètre moyen des pores de la membrane compris entre 0,5 et 2 nm, en général de l'ordre de 1 nm), en particulier pour la séparation de composés organiques et d'ions multivalents contenus dans de l'eau ou des effluents. Mais ces membranes restent des membranes organiques ou mixtes organiques/inorganiques, dont la tenue mécanique et l'inertie chimique, biologique et thermique ne sont pas aussi satisfaisantes que celles que l'on souhaiterait et qui ne peuvent pas fonctionner de manière toujours efficace dans des conditions extrêmes d'utilisation (pH, température, pression, ...).

Parallèlement, il est connu de mettre en oeuvre dans le procédé de raffinage du sucre de canne une opération de purification du sucre, en général en deux étapes, afin de le décolorer et d'éliminer certaines impuretés organiques tels que des polysaccharides.

La coloration est principalement due à la décomposition du glucose et du fructose à des températures n'excédant pas de beaucoup 100 °C.

La première étape de purification (ou décoloration), qui réside le plus souvent dans une carbonatation ou une phosphatation, est souvent suivie d'une seconde étape de purification (ou décoloration) dans laquelle la liqueur de sucre passe, en général à une température de 80 à 90 °C (pour réduire sa viscosité), dans une ou plusieurs résines échangeuses d'ions. Les colorants et autres impuretés contenus dans la liqueur de sucre sont alors adsorbés sur la résine (on cherche souvent à ce que près de 90 % de ces colorants soient ainsi éliminés).

Au bout d'un certain temps, il s'avère nécessaire de régénérer la résine chargée. La désorption des colorants (et autres impuretés) est alors réalisée en utilisant une solution de chlorure de sodium basique (en général, pH de l'ordre de 12) ou saumure, à une température habituellement comprise entre 80 et 90 °C.

L'effluent salin issu de la régénération des résines échangeuses d'ions contient essentiellement du chlorure de sodium mais aussi des matières organiques (colorants et autres impuretés).

La Demanderesse a mis au point, dans le but notamment de valoriser cet effluent salin, une nouvelle membrane de filtration, en l'occurrence une membrane inorganique particulière de nanofiltration.

Cette membrane, qui répond aux exigences de résistance thermique et chimique qui découlent des conditions de mise en oeuvre d'un procédé de raffinage du sucre de canne, permet une séparation efficace des matières organiques (colorants et autres impuretés) de l'effluent salin qui est ainsi régénéré et peut être ensuite utilisé de nouveau pour la désorption des colorants (et autres impuretés) adsorbés sur les résines.

L'emploi de cette membrane permet ainsi un recyclage efficace de l'effluent salin issu de la régénération des résines échangeuses d'ions et donc une réduction significative des quantités de chlorure de sodium et d'eau nécessaires à la fabrication des solutions de régénération des résines.

En plus de sa résistance thermique et chimique, la membrane selon l'invention présente une très bonne tenue mécanique, et donc une très longue durée de vie d'utilisation.

Ainsi, l'un des objets de l'invention réside dans une membrane inorganique de nanofiltration comportant :
- un support monolithe céramique multicanal composé d'un mélange d'Al₂O₃ et de TiO₂ et présentant un diamètre moyen équivalent de pores Ds compris entre 1 et 20 µm, de préférence entre 5 et 15 µm,
- une couche séparatrice membranaire de microfiltration située à la surface des canaux et constituée de particules d'oxyde(s) métallique(s) frittées dont le diamètre moyen équivalent de pores Do avant frittage est compris entre 0,1 et 3,0 µm suivant un rapport Ds/Do tel que 0,3 < Ds/Do < 200, de préférence 1 < Ds/Do < 150, ladite couche membranaire de microfiltration présentant un diamètre moyen équivalent de pores Dm compris entre 0,05 et 1,5 µm,
- une couche séparatrice membranaire d'ultrafiltration située sur ladite couche membranaire de microfiltration et constituée de particules d'oxyde(s) métallique(s) frittées dont le diamètre moyen équivalent de pores Du avant frittage est compris entre 2 et 100 nm suivant un rapport Dm/Du tel que 0,5 < Dm/Du < 750,
- une couche séparatrice membranaire de nanofiltration située sur ladite couche membranaire d'ultrafiltration et constituée de particules d'oxyde(s) métallique(s) frittées dont le diamètre moyen équivalent de pores Dn avant frittage est compris entre 0,5 et 1,5 nm,
   ladite membrane inorganique de nanofiltration présentant un seuil de coupure compris entre 100 et 2000 daltons.

Le support monolithe présente avantageusement une porosité élevée, en général supérieure à 30 %, de préférence supérieure à 40 % (mesurée à l'aide d'un porosimètre à mercure).

Il consiste préférentiellement en une céramique de grains d'Al₂O₃ enrobés au moins en partie par des grains de TiO₂, le rapport pondéral TiO₂ / (Al₂O₃ + TiO₂) étant compris entre 1 et 75 %, en particulier entre 20 et 50 %, par exemple entre 20 et 40 %.

Les grains d'Al₂O₃ présentent en général une granulométrie moyenne comprise entre 3 et 500 µm, de préférence entre 10 et 100 µm et, de manière encore plus préférée, entre 20 et 30 µm. Les grains de TiO₂ présentent habituellement une granulométrie moyenne comprise entre 0,01 et 7 µm, de préférence entre 0,1 et 1 µm.

En général, l'alumine est essentiellement de type corindon (les grains pouvant avoir une forme tabulaire) et l'oxyde de titane est essentiellement de type rutile.

Le support monolithe est de préférence préparé par le procédé décrit dans la demande de brevet EP-A-0585152 (colonne 3, ligne 24 à colonne 4, ligne 11).

Le support monolithe est généralement qualifié de macroporeux.

Ce support peut présenter un diamètre compris entre 15 et 30 mm, par exemple égal à 20 mm, et une longueur comprise entre 800 et 1300 mm, par exemple de l'ordre de 860 mm.

Son nombre de canaux est généralement compris entre 5 et 52, en particulier égal à 7 ou 19. Leur diamètre peut notamment se situer entre 1,5 et 7 mm, notamment entre 2,5 et 4,5 mm.

Un support particulièrement avantageux consiste dans un support monolithe employé dans les membranes KERASEP™ commercialisées par la Demanderesse.

Les métaux des oxydes métalliques formant les différentes couches séparatrices membranaires peuvent être par exemple choisis parmi le béryllium, le magnésium, le calcium, l'aluminium, le titane, le strontium, l'yttrium, le lanthane, le zirconium, l'hafnium, le thorium, le fer, le manganèse, le silicium et leurs divers mélanges possibles.

Toutefois, l'(les) oxydes(s) métallique(s) de la couche membranaire de microfiltration est (sont) en général de l'alumine, de la zircone ou, de préférence, de l'oxyde de titane.

La couche membranaire de microfiltration est habituellement déposée sur le support par le procédé connu dénommé engobage ("slip casting") selon lequel on dépose en général une barbotine de l'oxyde métallique sur le support puis on effectue un frittage approprié. La couche membranaire frittée a de préférence une épaisseur comprise entre 5 et 50 µm.

La température de frittage doit être compatible avec la température de frittage maximum du support. Ainsi, lorsque le support est en corindon et rutile, on utilise de préférence une couche membranaire à base d'oxyde de titane dont la température de frittage est inférieure à 1275 °C.

De manière très préférée, la couche membranaire de microfiltration ne doit pas pénétrer de façon sensible à l'intérieur du support. L'interpénétration de cette couche membranaire est ainsi généralement inférieure à 2 µm, en particulier inférieure à 0,5 µm.

Pour cela, on peut, avant l'engobage, combler la porosité du support par un liant organique se décomposant au moment du frittage, comme par exemple une résine mélanine / formol ; on peut également obturer les orifices des pores du support au moyen de poudres très fines de produits éliminantes par combustion dans l'air, comme par exemple le noir de carbone.

L'(les) oxyde(s) métallique(s) de la couche membranaire d'ultrafiltration peut (peuvent) être en particulier de l'oxyde de titane ou, de préférence, de la zircone.

Les particules d'oxydes métalliques frittées sont ici généralement obtenues :
soit avec un oxyde et un procédé pour déposer la couche analogues à ceux employées pour la couche membranaire de microfiltration (seule la granulométrie change),
soit par traitement thermique de particules d'oxydes hydratées obtenues par un procédé de type sol-gel et déposées par la méthode d'engobage.

La porosité de la couche membranaire d'ultrafiltration doit être adaptée à recevoir la couche membranaire de nanofiltration : la couche membranaire d'ultrafiltration présente ainsi un diamètre moyen de pores compris entre 2 et 100 nm, de préférence entre 2 et 50 nm.

De manière très préférée, la couche membranaire d'ultrafiltration ne doit pas pénétrer de façon sensible à l'intérieur de la couche membranaire de microfiltration.

Lorsque la couche membranaire d'ultrafiltration est de la zircone, ladite couche présente un seuil de coupure entre 10 et 300 kD (1kD = 10³ daltons), par exemple égal à 15 kD.

Il est à noter que l'ensemble support monolithe + couche membranaire de microfiltration + couche membranaire d'ultrafiltration forme une membrane d'ultrafiltration telle qu'illustrée dans la demande de brevet EP-A-0585152.

L'oxyde métallique de la couche membranaire d'ultrafiltration est, de préférence, de la zircone.

La couche membranaire de nanofiltration est avantageusement obtenue par un procédé de type sol-gel, comprenant, de préférence, une hydrolyse en milieu alcoolique, par exemple dans le propanol.

Selon un mode de réalisation préférée de l'invention, la couche membranaire de nanofiltration est une couche de zircone obtenue par un procédé de type sol-gel comprenant :
- la formation d'un sol par hydrolyse en milieu alcoolique, par exemple dans le propanol, d'un précurseur d'alcoxyde de zirconium, de préférence en présence d'un ligand complexant qui permet de contrôler l'hydrolyse, conformément à ce qui est décrit dans la demande de brevet EP-A-0627960 ; on peut, par exemple, former un tel sol en hydrolysant du propoxyde de zirconium (Zr(OC₃H₇)₄) dans le propanol en présence du ligand complexant acétylacétone ;
- le dépôt du sol sur la couche membranaire d'ultrafiltration ; ce dépôt est de préférence obtenu en mettant en contact par remplissage des canaux la couche membranaire d'ultrafiltration (donc la membrane d'ultrafiltration) et le sol précédemment préparé, auquel on aura préalablement ajouté un liant organique, par exemple de l'alcool polyvinylique, afin d'ajuster la viscosité ;
- la transformation du sol en gel par séchage ;
- enfin, un traitement thermique, qui permet la transformation de la couche de gel en couche d'oxyde métallique (zircone).

De préférence, on choisit des conditions opératoires de préparation du sol (teneur en alcoxyde, teneur en ligand complexant) et/ou des conditions de séchage et de traitement thermique (température) de manière à obtenir une membrane dite microporeuse (diamètre moyen de pores en général de l'ordre de 1 nm) ; la température de séchage peut ainsi être comprise entre 40 et 100 °C ; la température de traitement thermique est en particulier comprise entre 350 et 600 °C.

L'emploi d'un procédé de type sol-gel, tel que décrit précédemment, conditionne au moins en partie les caractéristiques de la membrane finale, notamment sa sélectivité et sa perméabilité hydraulique.

A titre indicatif, la membrane selon l'invention possède un flux de perméat à l'eau pouvant atteindre au moins 100 l/h.m² à une pression transmembranaire de 5 bars, avec un taux de rétention du saccharose pouvant être compris entre 35 et 60 % et un taux de rétention de la vitamine B12 entre 60 et 85 % ; l'épaisseur de la couche membranaire de nanofiltration est comprise de préférence entre 0,05 et 1 µm.

De plus, la membrane selon l'invention présente en particulier une stabilité thermique et chimique élevée (stable jusqu'à au moins 250 °C et stable à pH compris entre 0 et 14).

Comme souligné précédemment, la membrane inorganique selon l'invention trouve une application particulièrement intéressante dans l'industrie du sucre de canne.

Elle peut ainsi être efficacement utilisée dans un procédé de raffinage du sucre de canne, en particulier dans le traitement des effluents salins issus de la régénération des résines échangeuses d'ions employées dans le raffinage du sucre de canne.

Une nanofiltration à l'aide de cette membrane pourrait en outre remplacer, dans le procédé de raffinage du sucre de canne, l'une ou/et l'autre étape de décoloration de la liqueur de sucre ; en effet, le degré de décoloration généralement requis (environ 90 %) peut être atteint, voire même dépassé, par l'emploi de cette membrane.

L'exemple suivant illustre l'invention sans toutefois en limiter la portée.

### EXEMPLE

On met en oeuvre, pour le traitement d'un effluent salin issu de la régénération des résines échangeuses d'ions employées dans un procédé de raffinage du sucre de canne, un module (d'environ 1 m²) de 9 membranes inorganiques de nanofiltration selon l'invention ; la couche membranaire de nanofiltration de chacune de ces 9 membranes est une couche de zircone obtenue par un procédé de type sol-gel conforme au mode de réalisation préférée de l'invention tel que décrit précédemment (température de séchage : 80 °C ; température de traitement thermique : 400 °C), déposée sur une membrane d'ultrafiltration KERASEP™ ayant un seuil de coupure de 15 kD, le support (monolithe Al₂O₃ - TiO₂, de rapport pondéral TiO₂/ (Al₂O₃ + TiO₂) égal à 25 %) ayant un diamètre de 20 mm et une longueur de 856 mm et comportant 19 canaux ; dans chacune des 9 membranes, la couche membranaire de microfiltration est formée d'oxyde de titane et la couche membranaire d'ultrafiltration de zircone.

Pour chacune des 9 membranes, les diamètres moyens équivalents de pores sont : Ds : 6 µm ; Do : 0,2 µm ; Dm : 0,1 µm ; Du : 7 nm ; Dn : 1 nm. Le seuil de coupure de chacune d'entre elles est de 1000 daltons.

Les conditions opératoires sont les suivantes :
- Boucle fermée pour l'optimisation
- Température de 70 °C
- Pression de 10 à 15 bars
- Vitesse de circulation de 2 à 5 m/s
- Facteur de concentration volumique (FCV) de 5 à 8
- Flux perméat stable après 8 heures.

On obtient les résultats ci-après :
- NaCl récupéré 97 %
- Rétention couleur 90 %
- Débit 80-140 1/m²/h
- Volume récupéré > 85 %
- Rétention des impuretés > 90 %

## Revendications

1. Membrane inorganique de nanofiltration comportant :
- un support monolithe céramique multicanal composé d'un mélange d'Al₂O₃ et de TiO₂ et présentant un diamètre moyen équivalent de pores Ds compris entre 1 et 20 µm,
- une couche séparatrice membranaire de microfiltration située à la surface des canaux et constituée de particules d'oxyde(s) métallique(s) frittées dont le diamètre moyen équivalent de pores Do avant frittage est compris entre 0,1 et 3,0 µm suivant un rapport Ds/Do tel que 0,3 < Ds/Do < 200, ladite couche membranaire de microfiltration présentant un diamètre moyen équivalent de pores Dm compris entre 0,05 et 1,5 µm,
- une couche séparatrice membranaire d'ultrafiltration située sur ladite couche membranaire de microfiltration et constituée de particules d'oxyde(s) métallique(s) frittées dont le diamètre moyen équivalent de pores Du avant frittage est compris entre 2 et 100 nm suivant un rapport Dm/Du tel que 0,5 < Dm/Du < 750,
**caractérisée en ce qu'**elle comporte
- une couche séparatrice membranaire de nanofiltration située sur ladite couche membranaire d'ultrafiltration et constituée de particules d'oxyde(s) métallique(s) frittées dont le diamètre moyen équivalent de pores Dn avant frittage est compris entre 0,5 et 1,5 nm.
ladite membrane inorganique de nanofiltration présentant un seuil de coupure compris entre 100 et 2000 daltons.

2. Membrane selon la revendication 1, **caractérisée en ce que** ledit support monolithe présente une porosité supérieure à 30 %.

3. Membrane selon l'une des revendications 1 et 2, **caractérisée en ce que** ledit support monolithe est une céramique de grains d'Al₂O₃ enrobés au moins en partie par des grains de TiO₂, le rapport pondéral TiO₂/ (Al₂O₃ + TiO₂) étant compris entre 1 et 75 %.

4. Membrane selon l'une des revendications 1 à 3, **caractérisée en ce que** le (les) oxyde(s) métallique(s) de la couche membranaire de microfiltration est (sont) de l'alumine, de la zircone ou, de préférence, de l'oxyde de titane.

5. Membrane selon l'une des revendications 1 à 4, **caractérisée en ce que** le (les) oxyde(s) métallique(s) de la couche membranaire d'ultrafiltration est (sont) de l'oxyde de titane ou, de préférence, de la zircone.

6. Membrane selon l'une des revendications 1 à 5, **caractérisée en ce que** l'oxyde métallique de la couche membranaire d'ultrafiltration est de la zircone, ladite couche présentant un seuil de coupure compris entre 10 et 300 kD, par exemple égal à 15 kD.

7. Membrane selon l'une des revendications 1 à 6, **caractérisée en ce que** la couche membranaire de nanofiltration est de la zircone.

8. Membrane selon l'une des revendications 1 à 7, **caractérisée en ce que** la couche membranaire de nanofiltration est obtenue par un procédé de type sol-gel, de préférence comprenant une hydrolyse en milieu alcoolique.

9. Membrane selon la revendication 8, **caractérisée en ce que** la couche membranaire de nanofiltration est une couche de zircone obtenue par un procédé de type sol-gel comprenant :
- la formation d'un sol par hydrolyse en milieu alcoolique d'un précurseur d'alcoxyde de zirconium, de préférence en présence d'un ligand complexant ;
- le dépôt du sol sur la couche membranaire d'ultrafiltration, de préférence en mettant en contact par remplissage des canaux la couche membranaire d'ultrafiltration et le sol précédemment préparé, auquel on a préalablement ajouté un liant organique ;
- la transformation du sol en gel par séchage ;
- enfin, un traitement thermique.

10. Utilisation de la membrane selon l'une des revendications 1 à 9 dans un procédé de raffinage du sucre de canne.

11. Utilisation de la membrane selon l'une des revendications 1 à 9 pour le traitement des effluents salins issus de la régénération des résines échangeuses d'ions employées dans le raffinage du sucre de canne.

## Claims

1. An inorganic nanofiltration membrane comprising:
• a multichannel ceramic monolithic support composed of a mixture of Al₂O₃ and TiO₂ and having a mean equivalent pore diameter Dₛ in the range 1 to 20 µm;
• a microfiltration membranous separating layer located on the surface of the channels and constituted by particles of sintered metal oxide(s) with a mean equivalent pore diameter Do prior to sintering in the range 0.1 to 3.0 µm, wherein the ratio Dₛ/D₀ is such that 0.3 < Dₛ/D₀ < 200, said microfiltration membranous layer having a mean equivalent pore diameter Dₘ in the range 0.05 to 1.5 µm;
• an ultrafiltration membranous separating layer located on said microfiltration membranous layer and constituted by particles of sintered metal oxide(s) with a mean equivalent pore diameter Dᵤ prior to sintering in the range 2 to 100 nm, wherein the ratio Dₘ/Dᵤ is such that 0.5 < Dₘ/Dᵤ < 750; **characterized in that** it comprises
• a nanofiltration membranous separating layer located on said ultrafiltration membranous layer and constituted by particles of sintered metal oxide(s) with a mean equivalent pore diameter Dₙ prior to sintering in the range 0.5 to 1.5 nm;
said inorganic nanofiltration membrane having a cutoff threshold in the range 100 to 2000 daltons.

2. A membrane according to claim 1, **characterized in that** said monolithic support has a porosity of more than 30%.

3. A membrane according to claim 1 or claim 2, **characterized in that** said monolithic support is a ceramic formed by Al₂O₃ grains at least partially coated with TiO₂ grains, the ratio TiO₂/(Al₂O₃ + TiO₂) being in the range 1% to 75% by weight.

4. A membrane according to one of claims 1 to 3, **characterized in that** the metal oxide(s) of the microfiltration membranous layer is (are) formed from alumina, zirconia or, preferably, titanium oxide.

5. A membrane according to one of claims 1 to 4, **characterized in that** the metal oxide(s) of the ultrafiltration membranous layer is (are) formed from titanium oxide or, preferably, zirconia.

6. A membrane according to one of claims 1 to 5, **characterized in that** the metal oxide of the ultrafiltration membranous layer is formed from zirconia, said layer having a cutoff threshold in the range 10 to 300 kD, for example 15 kD.

7. A membrane according to one of claims 1 to 6, **characterized in that** the nanofiltration membranous layer is formed from zirconia.

8. A membrane according to one of claims 1 to 7, **characterized in that** the nanofiltration membranous layer is obtained by a sol-gel type process, preferably comprising hydrolysis in an alcoholic medium.

9. A membrane according to claim 8, **characterized in that** the nanofiltration membranous layer is a layer of zirconia obtained by a sol-gel type process comprising:
• forming a sol by hydrolysis in an alcoholic medium of a zirconium alkoxide precursor, preferably in the presence of a complexing ligand;
• depositing the sol on the ultrafiltration membranous layer, preferably by bringing the ultrafiltration membranous layer and the prepared sol, to which an organic binder has been added, into contact by filling the channels of said ultrafiltration membranous layer,
• transforming the sol into a gel by drying;
• finally, carrying out a heat treatment.

10. Use of a membrane according to one of claims 1 to 9 in a sugar cane refining process.

11. Use of a membrane according to one of claims 1 to 9 in treating saline effluents derived from regenerating ion exchange resins used in refining sugar cane.

## Patentansprüche

1. Anorganische Nanofiltrationsmembran umfassend:
- einen monolithischen keramischen Mehrkanalträger, der aus einer Mischung von Al₂O₃ und TiO₂ zusammengesetzt ist und einen mittleren Porenäquivalent-Durchmesser Ds aufweist, der zwischen 1 und 20 µm liegt,
- eine Mikrofiltrationstrennmembran-Schicht, die an der Oberfläche der Kanäle liegt und aus gesinterten Teilchen von Oxid(en) von Metall(en) zusammengesetzt ist, deren mittlerer Porenäquivalent-Durchmesser vor dem Sintern zwischen 0,1 und 3,0 µm liegt, gemäß einem derartigen Verhältnis Ds/Do, daß 0,3 < Ds/Do < 200, wobei die Mikrofiltrationsmembran-Schicht einen mittleren Porenäquivalent-Durchmesser Dm aufweist, der zwischen 0,05 und 1,5 µm liegt,
- eine Ultrafiltrationstrennmembran-Schicht, die auf der Mikrofiltrationsmembran-Schicht liegt und aus gesinterten Teilchen von Oxid(en) von Metall(en) zusammengesetzt ist, deren mittlerer Porenäquivalent-Durchmesser Du vor dem Sintern zwischen 2 und 100 nm liegt, gemäß einem derartigen Verhältnis Dm/Du, daß 0,5 < Dm/Du < 750, **dadurch gekennzeichnet, dass** sie umfasst:
- eine Nanofiltrationstrennmembran-Schicht, die auf der Ultrafiltrationsmembran-Schicht liegt und aus gesinterten Teilchen von Oxid(en) von Metall(en) zusammengesetzt ist, deren mittlerer Porenäquivalent-Durchmesser vor dem Sintern zwischen 0,5 und 1,5 nm liegt,
wobei die anorganische Nanofiltrationsmembran eine Durchgangsgrenze aufweist, die zwischen 100 und 2000 Dalton liegt.

2. Membran gemäß Anspruch 1, **dadurch gekennzeichnet, dass** der monolithische Träger eine Porosität höher als 30 % aufweist.

3. Membran gemäß einem der Ansprüche 1 und 2, **dadurch gekennzeichnet, dass** der monolithische Träger eine Keramik aus Al₂O₃-Körnern, die wenigstens zum Teil von TiO₂-Körnern umhüllt sind, darstellt, wobei das Gewichtsverhältnis TiO₂/(Al₂O₃+TiO₂) zwischen 1 und 75 % liegt.

4. Membran gemäß einem der Ansprüche 1 bis 3, **dadurch gekennzeichnet, dass** das Metalloxid bzw. die Metalloxide der Mikrofiltrationsmembran-Schicht Aluminiumoxid, Zirkonoxid oder bevorzugt Titanoxid ist bzw. sind.

5. Membran gemäß einem der Ansprüche 1 bis 4, **dadurch gekennzeichnet, dass** das Metalloxid bzw. die Metalloxide der Ultrafiltrationsmembran-Sthicht Titanoxid oder bevorzugt Zirkonoxid ist bzw. sind.

6. Membran gemäß einem der Ansprüche 1 bis 5, **dadurch gekennzeichnet, dass** das Metalloxid der Ultrafiltrationsmembran-Schicht Zirkonoxid ist, wobei die Schicht eine Durchgangsgrenze aufweist, die zwischen 10 und 300 kD liegt, beispielsweise gleich 15 kD.

7. Membran gemäß einem der Ansprüche 1 bis 6, **dadurch gekennzeichnet, dass** die Nanofiltrationsmembran-Schicht Zirkonoxid ist.

8. Membran gemäß einem der Ansprüche 1 bis 7, **dadurch gekennzeichnet, dass** die Nanofiltrationsmembran-Schicht durch ein Verfahren vom Typ Sol-Gel erhalten wird, das bevorzugt eine Hydrolyse in alkoholischem Medium umfasst.

9. Membran gemäß Anspruch 8, **dadurch gekennzeichnet, dass** die Nanofiltrationsmembran-Schicht eine Zirkonoxid-Schicht ist, erhalten durch ein Verfahren vom Typ Sol-Gel, umfassend:
- die Bildung eines Sols durch Hydrolyse im alkoholischen Medium eines Zirkoniumalkoxyd-Vorläufers, bevorzugt in Gegenwart eines komplexierenden Liganden;
- die Ablagerung des Sols auf der Ultrafiltrationsmembran-Schicht, bevorzugt mittels Inkontaktbringen durch Füllen der Kanäle der Ultrafiltrationsmembran-Schicht und des zuvor hergestellten Sols, dem vorher ein organisches Bindemittel zugesetzt wurde;
- die Umwandlung des Sols in ein Gel mittels Trocknung;
- schließlich eine Wärmebehandlung.

10. Verwendung der Membran gemäß einem der Ansprüche 1 bis 9 in einem Verfahren zum Raffinieren von Rohrzucker.

11. Verwendung der Membran gemäß einem der Ansprüche 1 bis 9 zur Behandlung von salzhaltigen Abwässern, die aus der Regenerierung der Ionenaustauscher, welche beim Raffinieren von Rohrzucker verwendet werden, stammen.
